# EUROPÄISCHE PATENTSCHRIFT

(11) **EP 1 130 791 B1**
(45) Veröffentlichungstag und Bekanntmachung des Hinweises auf die Patenterteilung: **30.01.2008**
(21) Anmeldenummer: 01102679.6
(22) Anmeldetag: 07.02.2001
(51) Int. Cl.: H04B 1/16

(54) **Verfahren zum Unterbrechen eines Ruhezustandes einer Kommunikationseinheit in einem Funk-Kommunikationssystem,**
Method for interrupting the power saving state of a communications unit in a radio communications system
Procedé d'interruption de l'état d'économie d'énergie dans une unité de communications d'un système de radiocommunications

(30) Priorität: 29.02.2000 DE 10009683
(43) Veröffentlichungstag der Anmeldung: 05.09.2001
(73) Patentinhaber: Nokia Corporation, 02150 Espoo (FI)
(72) Erfinder: Lindlar, Heribert, 44795 Bochum (DE)
(74) Vertreter: Becker Kurig Straus

(56) Entgegenhaltungen:
- EP-A- 0 865 167
- US-A- 5 428 820

## Beschreibung

Die Erfindung betrifft ein Verfahren zum Unterbrechen eines Ruhezustandes einer Kommunikationseinheit in einem Kommunikationssystem, insbesondere in einem Funkkommunikationssystem, gemäß dem Oberbegriff des Anspruchs 1. Ein derartiges Verfahren ist beispielsweise aus US 5 428 820 bekannt, die ein tragbares Funktelefon, das in einem Funkkommunikationssystem arbeitet, betrifft.

Auch EP 0 865 167 offenbart ein solches Verfahren.

In Systemen, die - wie beim Mobilfunk - nur einen geringen Leistungsbedarf aufweisen sollen, ist es entscheidend, Energie zu sparen wenn immer möglich. Innerhalb digitaler ASICs (anwendungsspezifische integrierte Schaltkreise) kann dies beispielsweise dadurch geschehen, dass während Aktivitätspausen möglichst viele Verbraucher, insbesondere möglichst viele Taktgeneratoren und zugeordnete Zähler oder Frequenzteiler abgeschaltet werden.

Um in digitalen Mobilfunk-Kommunikationssystemen, wie dem GSM (globales System für Mobilkommunikation) oder lokalen Funkschnittstellensystemen mit geringer Leistung, in einer Mobil- bzw. Untereinheit die Rahmensynchronisation zur Basisstation bzw. zur Haupteinheit zu halten, ist es nötig, Rahmenzähler kontinuierlich weiterlaufen zu lassen. Der Takt für die Rahmenzähler wird dabei üblicherweise von einem schnellen, hochgenauen Quarzoszillator geliefert, der z.B. beim GSM mit einer Frequenz von 13,0 MHz arbeitet. Falls die Rahmensynchronisation nicht beibehalten wird, ist zu Beginn jeder Aktivitätsphase eine vollständige Neusynchronisation nötig, die allerdings sehr leistungsaufwendig ist.

Um möglichst lange Stand-by-Zeiten, also möglichst lange Bereitschaftszeiten der Mobilstationen bzw. der Untereinheiten zu erreichen, ist es bereits bekannt, auch den schnellen Oszillator und die Rahmenzähler in den Pausen zwischen Aktivitäten abzuschalten. Während dieser Ruhephasen hält dann ein langsamer Oszillator mit zugeordneter Zählstufe die Synchronisation zur Basisstation oder Haupteinheit.

Bei einem aus der EP 0 726 687 A1 bekannten Mobiltelefon ist zur Rahmensynchronisation ein schneller, hochgenauer Oszillator vorgesehen, der ein Taktsignal mit 16,8 MHz liefert. Über eine Kaskade von Zählern oder Frequenzteilern werden Synchronisationssignale für Unterrahmen, Rahmen und Superrahmen, die jeweils aus 36 Rahmen bestehen, erzeugt und an einen Prozessor des Mobiltelefons geliefert, der von dem schnellen Oszillator getaktet wird. Während eines Ruhezustands werden der schnelle Oszillator und die zugeordneten Rahmenzähler deaktiviert und der Zeitpunkt der nächsten Aktivierung des Mobiltelefons wird mit Hilfe eines kostengünstigen, relativ langsamen Oszillators aufrecht erhalten. Als langsamer Oszillator kann dabei ein kostengünstiger 32 kHz Uhrenquarz eingesetzt werden, der nur eine extrem geringe Leistungsaufnahme im Bereich von wenigen Mikrowatt besitzt. Der angeschlossene Ruhezustandszähler verbraucht aufgrund der langsamen Taktung ebenfalls sehr wenig Leistung.

Da die Genauigkeit und Temperaturabhängigkeit des langsamen Oszillators jedoch um Größenordnungen schlechter ist als die des schnellen Oszillators, ist es erforderlich, den langsamen Oszillator so häufig wie nötig gegen den schnellen Oszillator zu kalibrieren. Ferner ist die zeitliche Auflösung des langsamen Oszillators mit circa 30 µs pro Taktperiode sehr viel schlechter als die etwa 60 ns bei 16,8 MHz oder die etwa 77 ns bei 13,0 MHz des schnellen Oszillators.

Bei einem bekannten Zeitmesssystem, bei dem neben einem schnellen, hochgenauen Oszillator ein langsamer Oszillator verwendet wird, wird der langsame Oszillator gegen den schnellen Oszillator kalibriert, um das Frequenzverhältnis zwischen dem schnellen Takt und dem langsamen Ruhezustandstakt zu ermitteln. In Kenntnis des Kalibrierwerts und der Dauer eines Zeitintervalls, also beispielsweise der Aktivitätspause bis zu einem nächsten zu erwartenden Burst kann dann die Dauer des Zeitintervalls in drei Abschnitten gemessen werden. Vom Beginn des Zeitintervalls bis zur ersten aktiven Flanke des langsamen Taktes wird die Zeitdauer mit Hilfe des schnellen Taktes ermittelt. Im zweiten Abschnitt, in dem der schnelle Oszillator abgeschaltet wird, um Energie zu sparen, wird die Zeitmessung mit Hilfe des langsamen Taktes durchgeführt. Am Ende des zweiten Abschnitts wird dann wiederum auf den schnellen Takt umgeschaltet, um das Ende des Zeitintervalls mit der durch den schnellen Oszillator gegebenen hohen Auflösung bestimmen zu können.

Demgemäß ist also der Steuerrechner (MCU) eines Mobiltelefons oder einer Untereinheit eines mit geringer Leistung arbeitenden Funk-Kommunikationssystems in der Lage, aus dem Kalibrierwert für das Frequenzverhältnis zwischen schnellem Referenztakt und langsamen Ruhezustandstakt und der zu erwartenden Zeit bis zum nächsten Burst, der abgehört werden soll, die Anzahl der erforderlichen langsamen Ruhezustandstakte bis vor den erwarteten abzuhörenden Burst zu berechnen. Dann wird bei einem definierten Zeitpunkt am Ende des letzten Empfangs-Burst vor Beginn der Ruhephase der Stand der schnellen Rahmenzähler festgehalten. Dies geschieht phasengenau mit der aktiven Flanke des langsamen Ruhezustandstaktes beim Start eines Ruhezustandszählers mit dem berechneten Startwert n, der auf den Zielwert 0 abwärts zählt. Der Steuerrechner ist aufgrund der festgehaltenen Zählerstände der Rahmenzähler in der Lage zu berechnen, mit welchem Zählerstand die Rahmenzähler nach Ablauf des Ruhezustandszählers synchron zur aktiven Flanke des Ruhezustandstaktes vorgeladen werden müssen, um das Zeitraster der Basisstation bzw. der Haupteinheit mit einer Genauigkeit von wenigen Bits wiederzutreffen.

Auf diese Weise lässt sich also der Energieverbrauch während Ruhezustandsphasen deutlich verringern.

Bei Systemen, wie bei Funk-Kommunikationssystemen mit geringer Sendeleistung, die auf den Verbrauch von besonders wenig Energie optimiert sind, sind die Ruhezustandsperioden sehr viel länger als z.B. beim GSM. Dabei kann die Ruhezustandsperiode mehrere Sekunden dauern.

Eine Anforderung durch den Benutzer, z.B. ein Tastendruck, weckt eine Untereinheit sofort auf. Als Folge davon wird der schnelle Oszillator gestartet und - nach Abwarten der Einschwingzeit - der Steuerrechner (MCU) eingeschaltet. Der Steuerrechner kann sofort mit lokalen Antworten z.B. auf einer Anzeigevorrichtung reagieren. Falls die Anforderung jedoch kurz nach Beginn einer Schlafperiode auftritt, muss der Datenaustausch mit der Basis- oder Hauptstation bis zum Ablauf der Ruhezustandsperiode warten. Bei vielen Anwendungen ist diese Verzögerung zu lang und für den Benutzer nicht akzeptabel.

Der Erfindung liegt die Aufgabe zugrunde, ein Verfahren zum Unterbrechen eines Ruhezustands einer Kommunikationseinheit in einem Kommunikationssystem, insbesondere in einem Funk-Kommunikationssystem bereitzustellen, das jederzeit eine schnelle Antwort des Systems auf eine Anforderung des Benutzers hin gewährleistet.

Diese Aufgabe wird durch das Verfahren nach Anspruch 1 gelöst.

Erfindungsgemäß wird also auf eine Unterbrechungsanforderung hin, die während eines Ruhezustands auftritt, die noch bis zur nächsten Aktivierung des Systems verbleibende Zeitdauer so reduziert, dass die reduzierte verbleibende Zeitdauer ausreicht, um die Aktivierung vorzubereiten. Auf diese Weise wird es ermöglicht, die Ruhezustandszeit auf eine Unterbrechungsanforderung hin drastisch zu verkürzen, ohne dass dabei die Synchronisation zwischen der Kommunikationseinheit und ihrer Basis- oder Hauptstation verloren geht. Dabei wird vor der Reduzierung der noch verbleibenden Zeitdauer überprüft, ob diese größer als eine vorgegebene Zeitdauer ist, um die noch verbleibende Zeitdauer nur dann zu reduzieren, wenn die beim Auftreten der Unterbrechungsanforderung noch verbleibende Zeitdauer größer als ein vorgegebener Wert ist.

Im einfachsten Fall kann dabei vorgesehen sein, dass die verbleibende Zeitdauer auf eine Unterbrechungsanforderung hin auf eine für die Vorbereitung der Aktivierung ausreichende vorgegebene kurze Zeitdauer gesetzt wird.

Besonders vorteilhaft ist es jedoch, dass die noch verbleibende Zeitdauer festgestellt wird, um daraus einen Subtraktionswert zu ermitteln, um den die noch verbleibende Zeitdauer reduziert wird. Diese Vorgehensweise hat den Vorteil, dass alle nötigen Aktionen zwischen dem Feststellen der noch verbleibenden Zeitdauer und dem Einstellen der reduzierten Zeitdauer ausgeführt werden können, ohne dass durch Zeitverzögerungen Probleme hervorgerufen werden könnten.

Zweckmäßigerweise wird die noch verbleibende Zeitdauer eines Ruhezustandes als Zählwert eines Ruhezustandzählers einer Zeitgeberschaltung erfasst, dessen Zählwert auf einen näher am Zielwert liegenden Zählwert gestellt wird, um die noch verbleibende Zeitdauer noch zu reduzieren.

Der Ruhezustandszähler ist dabei vorteilhafterweise ein von einem relativ langsamen Takt getakteter Zähler, der zusammen mit einem von einem schnelleren Takt getakteten Rahmenzähler die gesamte Ruhezustandsdauer festlegt, wobei der Rahmenzähler die restliche Ruhezustandszeit nach Ablauf des Ruhezustandszähler bis zur Aktivierung der Kommunikationseinheit festlegt, und das nach dem Einstellen des Ruhezustandszählers auf einen neuen Zählwert der Startzählwert des Rahmenzählers neu eingestellt wird, wobei der neue Startzählwert in Abhängigkeit von der Verkürzung der Ruhezustandszeit berechnet wird.

Die Erfindung wird im Folgenden beispielsweise anhand der Zeichnung näher erläutert. Es zeigen:
Fig. 1 ein vereinfachtes schematisches Zeitdiagramm zur Veranschaulichung der Ruhezustandszeitdauererfassung beim erfindungsgemäßen Verfahren,
Fig. 2 ein vereinfachtes schematisches Blockschaltbild einer ersten Ruhezustandszählerschaltung zur Durchführung des erfindungsgemäßen Verfahrens,
Fig. 3 ein vereinfachtes schematisches Blocksschaltbild einer zweiten Ruhezustandszählerschaltung zur Durchführung des erfindungsgemäßen Verfahrens, und
Fig. 4 ein detailliertes schematisches Blockschaltbild der Ruhezustandszählerschaltung nach Fig. 3.

In den verschiedenen Figuren der Zeichnung sind einander entsprechende Schaltungselemente mit gleichen Bezugszeichen versehen.

In Kommunikationssystemen, insbesondere in Funk-Kommunikationssystemen erfolgt der Informations- und Datenaustausch zwischen einer Mobilstation und einer Basisstation oder zwischen einer Slave- oder Unterstation und einer zugeordneten Master- oder Hauptstation mit einer Rahmenstruktur, bei der ein Rahmen eine bestimmte zeitliche Länge aufweist und in eine Vielzahl von Zeitschlitze unterteilt ist, um im sogenannten TDMA (Time Divisional Multiplexus, vielfach Zugriff im Zeitmultiplex) Verfahren den Aufbau mehrerer Sende- und Empfangskanäle zu ermöglichen, so dass eine Mehrzahl von Mobil- oder Slavestationen mit einer zugeordneten Basis- oder Masterstation kommunizieren können.

Jeder Slavestation werden dabei ein Zeitschlitz zum Empfang von Daten von der Masterstation und ein Zeitschlitz zum Senden von Daten zu der Masterstation zugeordnet.

Im Bereitschafts- oder Stand-by-Betrieb, wenn also keine Kommunikation stattfindet, braucht die Slavestation nur jeweils während der dem Empfangskanal zugeordneten Zeitschlitze, in denen ein Burst empfangen werden kann, aktiv zu sein. Während der restlichen Zeit kann die Slavestation in einen Ruhezustand versetzt werden, in dem der Steuerrechner MCU, ein schneller, hochgenauer Oszillator zur Erzeugung eines schnellen Taktes, der beispielsweise eine Frequenz von 13,0 MHz besitzt, und die zugeordneten Rahmenzähler abgeschaltet werden, während die Erfassung der Ruhezustandsdauer von einem Ruhezustandszähler übernommen wird, der von einem langsamen Oszillator, beispielsweise von einem Uhrenquarz getaktet wird, der mit einer Frequenz von etwa 32 768 Hz betrieben wird.

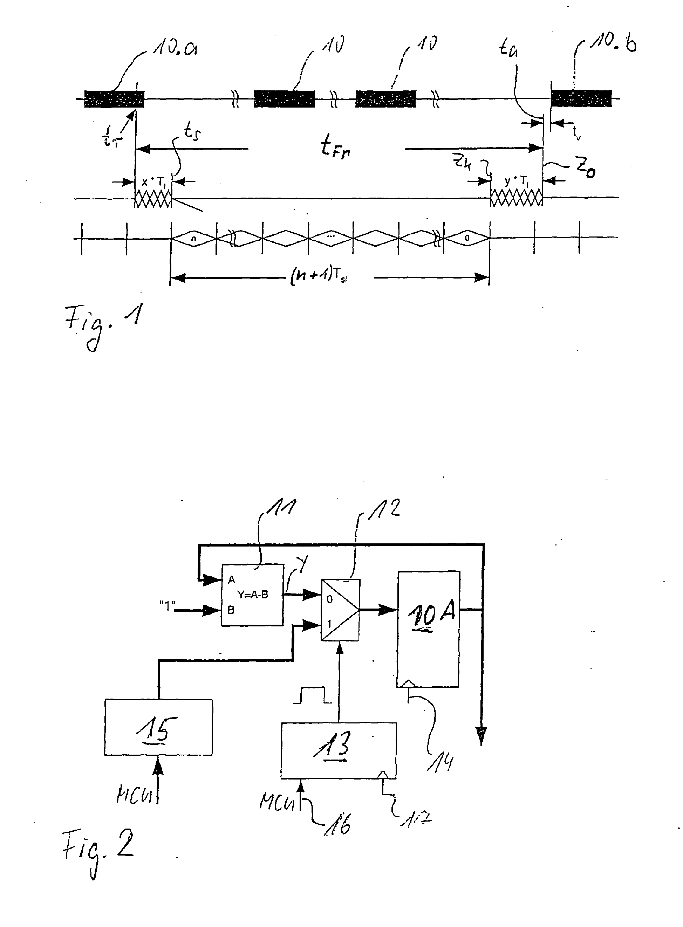

Um die Synchronisation einer Kommunikationseinheit, insbesondere einer Slavestation zu veranschaulichen, sind in Fig. 1 Empfangsbursts 10 in den ihrem Empfangskanal zugewiesenen Zeitschlitzen dargestellt. Grundsätzlich ist es denkbar, dass die Kommunikationseinheit am Ende jedes Bursts 10 in einen Ruhezustand versetzt wird, um vor dem Eintreffen des nächsten Bursts, also vor Beginn des nächsten dem Empfangskanal zugeordneten Zeitschlitzes wieder aktiviert zu werden. In Fig. 1 ist jedoch der Fall dargestellt, dass die Kommunikationseinheit für eine Vielzahl von Rahmenzeiten in einen Ruhezustand versetzt wird, um möglichst viel Energie zu sparen und eine möglichst lange Bereitschaftszeit bei vorgegebener Energiequelle sicherzustellen.

Soll eine Kommunikationseinheit nach Beendigung einer Aktivitätsphase in den Ruhezustand versetzt werden, so wird zunächst die konstante Zeitdauer t_{Fr} zwischen einem Zeitpunkt tᵣ am Ende eines Bursts 10.a bis zu einem Zeitpunkt tₐ vor dem nächsten abzuhörenden Burst 10.b aus der Rahmenzeit, der Dauer eines Zeitschlitzes und der Anzahl der Rahmen, für deren Dauer die Kommunikationseinheit in den Ruhezustand versetzt werden soll, ermittelt. Die Zeit t_{Fr} lässt sich als Anzahl z von Perioden T_{f} des schnellen Taktes, z.B. 1/13 MHz ~ 77 ns, angeben.

Um das Frequenzverhältnis k von schnellem Takt (13 MHz) und langsamen Takt (etwa 32 kHz) zu ermitteln, wird beispielsweise in einem Kalibrierungsschritt die Zeit bis zum nächsten abzuhörenden Burst 10.b, also die Zeit t_{Fr} und damit der Zeitpunkt tₐ dadurch ermittelt, dass der Rahmenzähler und der diesen taktende schnelle Oszillator durchlaufen, um ein Aktivierungssignal auszugeben, wenn der Zählerstand des Rahmenzählers den Wert z₀ erreicht. Gleichzeitig wird der Ruhezustandszähler von dem langsamen Oszillator getaktet, um von einem Startwert nₖ für die Kalibrierung aus zu zählen.

Nach Ablauf der Zeit t_{Fr} kann dann die Anzahl der schnellen Taktperioden T_{f} mit der Anzahl der langsamen Taktperioden Tₛₗ ins Verhältnis gesetzt werden, um den Kalibrierwert k= Tₛₗ/T_{f} = f_{f}/fₛₗ zu berechnen (wobei f_{f} die Frequenz des schnellen Oszillators und fₛₗ die Frequenz des langsamen Oszillators ist). Dabei ist es besonders zweckmäßig, wenn der Zählwert x des schnellen Rahmenzählers phasengenau mit der aktiven Flanke des Ruhezustandstaktes beim Start des Ruhezustandszählers mit dem Kalibrierungsstartwert nₖ ebenso festgehalten wird, wie der Zählerstand zₖ des schnellen Rahmenzählers bei Erreichen eines vorgegebenen Zielwerts des Ruhezustandszählers.

Diese Kalibrierung muss in gewissen Abständen wiederholt werden, um Langzeitdriften und die Temperaturabhängigkeit des langsamen Oszillators zu berücksichtigen.

Mit dem Kalibrierwert k, kann der Startwert n des Ruhezustandszählers ermittelt werden, wenn der Ruhezustandszähler ein zum Zielwert 0 herabzählender Zähler ist. Umgekehrt kann bei einem von 0 startenden Aufwärtszähler der Zielwert festgelegt werden.

Im normalen Bereitschaftsbetrieb wird nach einem abgehörten Burst 10.a zum Zeitpunkt tₛ der Stand des schnellen Rahmenzählers phasengenau mit der aktiven Flanke des langsamen Ruhezustandstaktes beim Start des Ruhezustandszählers festgehalten. Aus dem Stand des Rahmenzählers zum Zeitpunkt tₛ wird dann die Anzahl x von Perioden T_{f} des schnellen Taktes ermittelt, die seit dem Referenzzeitpunkt tᵣ am Ende des Bursts 10.a vergangen ist. Mit dem Kalibrierwert k, der Anzahl x von Perioden T_{f} des schnellen Taktes, dem Startwert n, der Zeit t_{Fr} und dem Zielzählwert z₀ des schnellen Rahmenzählers lässt sich der Zählerstand zₖ berechnen, mit dem der schnelle Rahmenzähler gestartet wird, sobald der langsame Ruhezustandszähler seinen Zielwert erreicht hat.

Beim Bereitschaftsbetrieb wird am Ende eines abgehörten Bursts 10.a zur Zeit tᵣ der schnelle Rahmenzähler gestartet, dessen Zählwert festgehalten wird, wenn der Ruhezustandszähler mit der aktiven Flanke des Ruhezustandstaktes gestartet wird. Der Ruhezustandszähler zählt dann vom Startwert n abwärts bis der Zielwert 0 erreicht ist, wenn keine Unterbrechung auftritt. Nach Erreichen des Zielwerts gibt der Ruhezustandszähler ein Startsignal für den schnellen Rahmenzähler aus, der auf den Wert zₖ eingestellt ist, um die verbleibende Zeit y • T_{f} bis zur Aktivierung des Systems genau zu erfassen. Sobald der schnelle Rahmenzähler dann den dem Zeitpunkt tₐ entsprechenden Zählwert z erreicht hat, wird das System aktiviert und auf Empfang geschaltet.

Betätigt ein Benutzer der Kommunikationseinheit eine Eingabetaste, während diese im Bereitschaftsbetrieb im Ruhezustand ist, so wird sofort der schnelle Oszillator gestartet und der Steuerrechner MCU aktiviert. Somit können sämtliche Funktionen der Kommunikationseinheit ausgeführt werden, die keinen Daten- oder Informationsaustausch mit einer Basisstation erfordern. Dann wird der Ruhezustandszähler abgefragt, um die bis zur nächsten Aktivierung zum Zeitpunkt tₐ verbleibende Zeitdauer zu erfassen. Ist diese kleiner als ein vorgegebener Wert, ist also der Zählwert bei abwärts zählendem Ruhezustandszähler kleiner als ein vorgegebener Wert, so wird die verbleibende Zeit bis zu nächsten Aktivierung einfach abgewartet, ohne in den Betrieb der einzelnen Zähler einzugreifen.

Ist jedoch die verbleibende Zeitdauer bis zum Aktivierungszeitpunkt tₐ größer als ein vorgegebener Wert, so wird zur Reduzierung der verbleibenden Zeitdauer der Zählwert des Ruhezustandszählers auf einen neuen Wert eingestellt, der einer Zeitdauer entspricht, die ausreicht, um die Zählerstände der schnellen Rahmenzähler für die vorgesehene Aktivierung neu zu berechnen und in die Rahmenzähler zu laden.

Das Einstellen des Ruhezustandszählers auf einen neuen näher am Zielwert liegenden Zählwert kann dabei einfach dadurch erfolgen, dass der Ruhezustandszähler mit dem neuen Wert überschrieben wird. Hierfür ist es jedoch erforderlich, dass die Berechnung der neuen Zählerstände für die schnellen Rahmenzähler so schnell erfolgt, dass das Überschreiben des Zählerstandes des Ruhezustandszählers zu dem Zeitpunkt erfolgt, der bei der Berechnung der Zählerstände vorausgesetzt wurde.

Fig. 2 zeigt eine erste Ausführung eines Ruhezustandszählers einer Zeitgeberschaltung, bei dem der Zählwert zur Reduzierung der Zeitdauer einfach mit einem vorgegebenen, näher am Zielwert liegenden Zielwert überschrieben werden kann. Der als Abwärtszähler ausgebildete Ruhezustandszähler weist ein Register 10 auf, das beispielsweise als 32 Bit Register ausgebildet sein kann, und dessen Ausgang A einerseits an einen Eingang A eines Subtrahierers 11 und andererseits an eine nicht näher gezeigte Vergleichsschaltung angelegt ist, um Aktivierungssignale für den schnellen Oszillator und den schnellen Rahmenzähler zu erzeugen.

Am zweiten Eingang B des Subtrahierers 11 liegt der Wert "1" an, der vom Ausgangswert des Registers 10 subtrahiert wird. Der Ausgang Y, an dem der Wert A - B ansteht, ist an einen ersten Eingang 0 eines Multiplexers 12 angelegt, der von einer Synchronisationsschaltung 13 gesteuert wird. Der Ausgang des Multiplexers 12 ist an den Eingang des Registers 10 geführt, an dessen Takteingang 14 der Ruhezustandstakt vom langsamen Oszillator angelegt ist, so dass mit jedem Takt der am Eingang des Registers 10 anliegende Wert auf dessen Ausgang A durchgeschaltet wird. Der am Ausgang A des Registers 10 anstehende Zählwert wird also mit jedem Takt des langsamen Ruhezustandstaktes um 1 vermindert, solange der Multiplexer 12 den Ausgang Y des Subtrahierers 11 auf den Eingang des Registers 10 durchschaltet.

Ein zweiter Eingang des Multiplexers 12 ist mit einem Ausgang eines Laderegisters 15 verbunden, in das vom Steuerrechner ein Zählwert neu eingeschrieben wird, auf den das Register 10 des Ruhezustandszählers eingestellt werden soll. Der Zählwert vom Laderegister 15 wird immer dann an den Eingang des Registers 10 angelegt, wenn die Synchronisationsschaltung 13 den Ausgang des Multiplexers 12 vom Eingang 0 für den Normalbetrieb auf den Eingang 1 für den Ladebetrieb umschaltet.

Das Laderegister 15 dient im normalen Bereitschaftsbetrieb dazu, das Register 10 des Ruhezustandszählers auf den für die jeweils folgende Ruhezustandsperiode berechneten Anfangszählwert n einzustellen.

Tritt während einer Ruhezustandsperiode eine Unterbrechungsanforderung zu einem Zeitpunkt auf, der eine Reduzierung der verbleibenden Ruhezustandsdauer erforderlich macht, so lädt der Steuerrechner MCU einen Zählwert, auf den das Register 10 des Ruhezustandszählers gesetzt werden soll, in das Laderegister 15. Gleichzeitig wird ein Ladebefehl an einen Steuereingang 16 der Synchronisationsschaltung 13 angelegt, an deren Takteingang 17 der langsame Ruhezustandstakt anliegt. Liegt am Steuereingang 16 der Synchronisationsschaltung 13 ein Ladebefehl vom Steuerrechner MCU an, so wird der Ausgang der Synchronisationsschaltung 13 mit der nächsten aktiven Flanke des Ruhezustandstaktes von 0 auf 1 geschaltet, so dass der Ausgang des Multiplexers 12 synchron zum Ruhezustandstakt auf den Eingang 1 umgeschaltet wird, an dem der Wert des Laderegisters anliegt, so dass das Register 10 synchron zum Ruhezustandstakt auf den neuen Zählwert eingestellt wird.

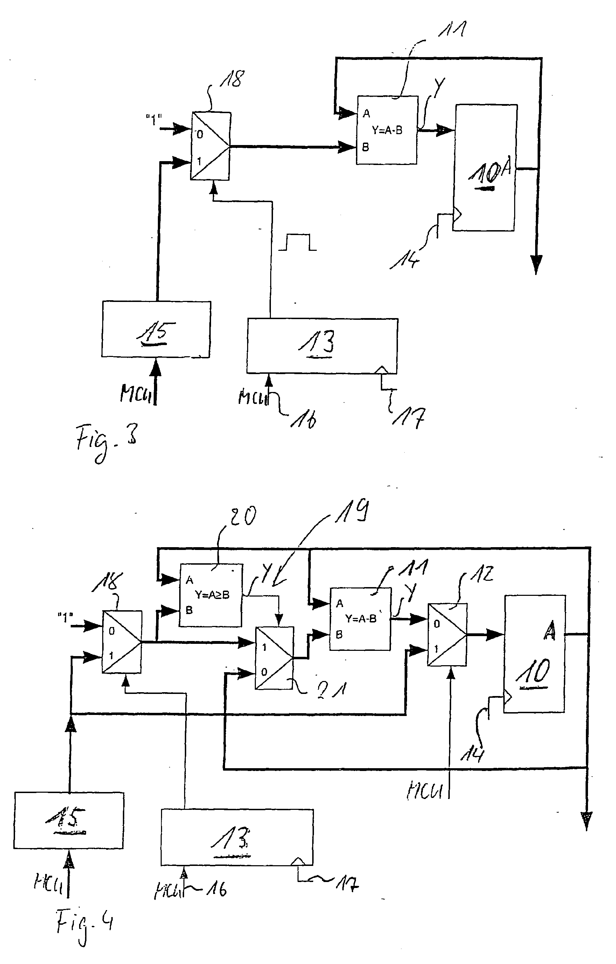

Fig. 3 zeigt eine weitere Schaltungsanordnung eines Ruhezustandszählers einer Zeitgeberschaltung mit einem Register 10 und einem Subtrahierer 11, bei dem der Ausgang Y des Subtrahierers 11 direkt am Eingang des Registers 10 anliegt. An den zweiten Eingang B des Subtrahierers 11, an dem der jeweils zu subtrahierender Wert anliegt, ist der Ausgang eines Multiplexers 18 angeschlossen, der von einer Synchronisationsschaltung 13 gesteuert wird, um einen ersten Eingang 0 oder einen zweiten Eingang 1 auf den Ausgang durchzuschalten. Der erste Eingang 0 des Multiplexers 18, an dem der Wert "1" anliegt, ist normalerweise an seinen Ausgang und damit an den zweiten Eingang B des Subtrahierers 11 angelegt, so dass mit jedem Ruhezustandstakt der am Ausgang A des Registers 10 anliegende Zählwert um 1 dekrementiert wird.

Ist während einer Ruhezustandsperiode eine Reduzierung des Zählwerts des Ruhezustandszählers erforderlich, so berechnet zunächst der Steuerrechner MCU aus dem aktuellen Zählwert des Ruhezustandszählers und dem Zählwert, auf den der Ruhezustandszähler eingestellt werden soll, einen Subtraktionswert und lädt diesen ins Laderegister 15 dessen Ausgang am zweiten Eingang 1 des Multiplexers 18 anliegt. Daraufhin gibt der Steuerrechner MCU ein Subtraktionssignal an den Steuereingang 16 der Synchronisationsschaltung 13 aus, deren Ausgang daraufhin mit der nächsten aktiven Flanke des Ruhezustandstaktes auf 1 gesetzt wird, um den zweiten Eingang 1 des Multiplexers 18 auf seinen Ausgang umzuschalten, so dass der Subtraktionswert vom Laderegister 15 an den zweiten Eingang des Subtrahierers 11 angelegt wird. Am Ausgang Y des Subtrahierers steht --somit als reduzierter Zählwert der um den Subtrahierwert reduzierte Ausgangszählwert des Registers 10 an, der beim nächsten Ruhezustandstakt vom Register 10 übernommen wird. Anschließend wird der Multiplexer 18 wieder in den Normalzustand geschaltet, in dem der Eingang 0 auf den Ausgang durchgeschaltet ist, um ausgehend vom reduzierten Zählwert des Ruhezustandszählers diesen mit jedem Ruhezustandstakt wie üblich um 1 zu dekrementieren.

Hier wird also der Ruhezustandszähler dadurch auf einen reduzierten Zählwert eingestellt, dass ein Subtraktionswert ermittelt und vom aktuellen Zählwert abgezogen wird. Dies hat den Vorteil, dass es ohne Einfluss auf die Synchronisation ist, wann das Einstellen erfolgt, solange der aktuelle Zählerstand nicht nahe bei 0 liegt, solange also der aktuelle Zählerstand noch größer als der Subtraktionswert ist.

Fig. 4 zeigt eine detailliertere Schaltung des Ruhezustandszählers nach Fig. 3, bei dem ähnlich wie bei dem Ruhezustandszähler nach Fig. 2 ein Multiplexer 12 zwischen den Ausgang Y des Subtrahierers 11 und den Eingang des Registers 10 geschaltet ist, dessen erster Eingang 0 mit dem Ausgang Y des Subtrahierers 11 verbunden ist, während an seinem zweiten Eingang 1 der Ausgang des Laderegisters 15 angeschlossen ist. Ferner ist eine Unterlaufunterdrückungsschaltung 19 vorgesehen, die einen Komparator 20 und einen Multiplexer 21 umfasst, der vom Komparator 20 gesteuert wird.

Zum Einstellen des Ruhezustandszählers auf den Startwert n wird der Startwert n vom Steuerrechner MCU in das Laderegister 15 geladen. Anschließend wird der mit dem Register 10 verbundene Multiplexer 12 über eine entsprechend Synchronisationsschaltung von der MCU so umgeschaltet, dass der mit dem zweiten Eingang 1 des Multiplexers 12 verbundene Ausgang des Laderegisters 15 auf den Eingang des Registers 10 durchgeschaltet ist, um mit dem nächsten Ruhezustandstakt am Takteingang 14 des Registers 10 den Startwert n in das Register 10 zu laden. Anschließend kann dann der Ruhezustandszähler mit der nächsten aktiven Flanke des Ruhezustandstaktes gestartet werden.

Beim normalen Zählbetrieb wird der am ersten Eingang 0 des Multiplexers 18 anliegende Wert "1" über den Multiplexer 21 an den zweiten Eingang B des Subtrahierers 11 gelegt, so dass mit jedem Takt der Zählwert des Registers 10 um 1 dekrementiert wird.

Ist eine Reduzierung des Zählwerts infolge einer Unterbrechungsanforderung erforderlich, so wird vom Steuerrechner MCU ein Subtraktionswert in das Laderegister 15 geladen und der Multiplexer 18 von der Synchronisationsschaltung 13 aufgrund eines Subtraktionsbefehls vom Steuerrechner MCU auf seinen zweiten Eingang 1 umgeschaltet, so dass der Subtraktionswert vom Laderegister 15 über den Multiplexer 18 und den Multiplexer 21 am zweiten Eingang B des Subtrahierers 11 anliegt. Mit dem nächsten Ruhezustandstakt wird dann der Zählwert des Registers 10 um den am Subtrahierer 11 anliegenden Subtraktionswert reduziert, um daraufhin den normalen Abwärtszählbetrieb fortzusetzen.

Um einen Unterlauf des Zählers zu unterdrücken, um also den Zähler auf dem Wert 0 zu halten, sobald der Wert 0 erreicht ist, vergleicht der Komperator 20, den an seinem Eingang A anliegenden Zählwert vom Register 10 mit dem am Eingang B anliegenden Wert vom Ausgang des Multiplexers 18. Der am Eingang B anliegende Wert ist also entweder der Wert "1" oder der Subtraktionswert vom Laderegister 15. Solange der am Eingang B des Komperators 20 anliegende Wert kleiner als der oder gleich dem am Ausgang A des Registers 10 anstehenden Zählwert ist, liefert der Komperator 20 einen Wert 1, der den Multiplexer 21 auf seinen ersten Eingang 1 schaltet, so dass am zweiten Eingang B des Subtrahierers 1 entweder der Wert 1 oder der Subtraktionswert vom Laderegister 15 anliegt.

Wird der am zweiten Eingang B des Komperators 20 anliegend Wert größer als der am ersten Eingang A anliegend Zählwert von Register 10 so schaltet der Ausgang Y des Komperators 20 auf 0 und steuert damit den Multiplexer 21 so, dass sein zweiter Eingang 0, an dem der Ausgang A des Registers 10 anliegt, über den Ausgang an den zweiten Eingang B des Subtrahierers 11 angelegt wird. An beiden Eingängen des Subtrahierers 11 liegt dann also derselbe Zählwert vom Ausgang A des Registers 10 an, so dass das Register 10 auf 0 gehalten wird. Somit wird ein Weiterzählen des Ruhezustandszählers verhindert, sobald dieser den Wert 0 erreicht hat.

Die Unterlaufunterdrückungsschaltung 19 verhindert aber auch, dass ein zu großer Wert vom Laderegister 15 an den zweiten Eingang B des Subtrahierers 11 angelegt wird, der einen Unterlauf des Zählers hervorrufen könnte. Ist nämlich der Wert vom Laderegister 15 größer als der Zählwert vom Register 10 so schaltet der Komperator 20 den Multiplexer 21 auf den zweiten Eingang 0, wodurch wiederum an beiden Eingängen des Subtrahierers 11 derselbe Ausgangswert des Registers 10 anliegt, so dass dieses auf 0 gesetzt wird. Die Unterlaufunterdrückungsschaltung 19 gewährleistet also, dass der Ruhezustandszähler stets bei 0 stoppt und nicht über- oder unterläuft.

Die Erfindung ermöglicht also auf eine Unterbrechungsanforderung hin die Verkürzung einer Ruhezustandsperiode beim Stand-by-Betrieb einer Kommunikationseinheit, ohne dass die Synchronisation mit anderen Kommunikationseinheiten, insbesondere mit einer Basis- oder Masterstation verloren geht. Damit wird eine schnelle Reaktion des Kommunikationssystems auf Benutzereingaben auch dann sichergestellt ist, wenn aus Energiespargründen extrem lange Ruhezustandsperioden von mehreren Sekunden vorgesehen sind.

## Patentansprüche

1. Verfahren zum Unterbrechen eines Ruhezustands einer Kommunikationseinheit in einem Kommunikationssystem, insbesondere in einem Funk-Kommunikationssystem, bei dem in Antwort auf eine Unterbrechungsanforderung hin die noch bis zur nächsten Aktivierung verbleibende Zeitdauer auf eine Zeitdauer reduziert wird, die zur Vorbereitung der Aktivierung ausreicht, **dadurch gekennzeichnet, dass** die noch bis zur nächsten Aktivierung verbleibende Zeitdauer nur dann reduziert wird, wenn die noch verbleibende Zeitdauer größer als eine vorgegebene Zeitdauer ist.

2. Verfahren nach Anspruch 1, worin die verbleibende Zeitdauer auf eine Unterbrechungsanforderung hin auf eine für die Vorbereitung der Aktivierung ausreichende vorgegebene kurze Zeitdauer gesetzt wird.

3. Verfahren nach Anspruch 1, worin die noch verbleibende Zeitdauer festgestellt wird, um daraus einen Subtraktionswert zu ermitteln, um den die noch verbleibende Zeitdauer reduziert wird.

4. Verfahren nach Anspruch 1 bis 3, worin die noch verbleibende Zeitdauer eines Ruhezustands als Zählwert eines Ruhezustandszählers einer Zeitgeberschaltung erfasst wird, dessen Zählwert auf einen näher am Zielwert liegenden Zählwert gestellt wird, um die noch verbleibende Zeitdauer zu reduzieren.

5. Verfahren nach Anspruch 4, worin der Ruhezustandszähler ein von einem relativ langsamen Takt getakteter Zähler ist, der zusammen mit einem von einem schnelleren Takt getakteten Rahmenzähler die Ruhezustandsdauer festlegt, wobei der Rahmenzähler die restliche Ruhezustandsdauer nach Ablauf des Ruhezustandszählers bis zur Aktivierung der Kommunikationseinheit festlegt, und dass nach dem Einstellen des Ruhezustandszählers auf einen neuen Zählwert, der Startzählwert des Rahmenzählers neu eingestellt wird.

6. Verfahren nach Anspruch 5, worin der neue Startzählwert in Abhängigkeit von der Verkürzung der Ruhezustandszeit berechnet wird.

## Claims

1. A method for interrupting an idle state of a communication unit in a communication system, especially in a radio communication system, in which, in response to an interrupt request, the period of time still remaining until the next activation is reduced to a period of time that is sufficient for preparing the activation, **characterised in that** the period of time still remaining until the next activation time is only reduced when the period of time still remaining is greater than a predetermined period of time.

2. A method according to Claim 1, wherein the period of time remaining following an interrupt request is set to a predetermined short period of time that is sufficient for preparing the activation.

3. A method according to Claim 1, wherein the period of time still remaining is ascertained in order to determine therefrom a subtraction, value by which the period of time still remaining is reduced.

4. A method according to Claim 1 to 3, wherein the still remaining period of time of an idle state is recorded as a counted measurand of an idle state counter of a timing circuit, the counted measurand of which is set to a counted measurand that is closer to the target value in order to reduce the period of time still remaining.

5. A method according to Claim 4, wherein the idle state counter is a counter that is clocked by a relatively slow clock and that, together with a frame counter clocked by a faster clock, establishes the idle state period, whereby the frame counter establishes the idle state period after the idle state counter has elapsed remaining until the activation of the communication unit, and, after the idle state counter has been set to a new counted measurand, the starting counted measurand of the frame counter is reset.

6. A method according to Claim 5, wherein the new starting counted measurand is calculated in dependence on the shortening of the idle state time.

## Revendications

1. Procédé d'interruption d'un état de repos d'une unité de communication dans un système de communication, en particulier dans un système de radiocommunication, dans le cadre duquel, en réponse à une demande d'interruption, la durée restante jusqu'à la prochaine activation est réduite à une durée suffisante à la préparation de l' activation, **caractérisé en ce que** la durée restante jusqu'à la prochaine activation n'est alors réduite que si la durée restante est supérieure à une durée prédéterminée.

2. Procédé selon la revendication 1, dans lequel la durée restante est calée, suite à une demande d'interruption, sur une courte durée prédéterminée, suffisante à la préparation de l'activation.

3. Procédé selon la revendication 1, dans lequel on établit la durée restante pour calculer à partir de cette dernière une valeur soustractive dont sera réduite la durée restante.

4. Procédé selon les revendications 1 à 3, dans lequel la durée restante d'un état de repos est considérée comme une valeur de comptage d'un compteur d'état de repos d'un circuit de synchronisation dont la valeur de comptage est fixée à une valeur de comptage plus proche de la valeur cible, afin de réduire la durée restante.

5. Procédé selon la revendication 4, dans lequel le compteur de repos est un compteur dont la cadence est relativement lente, qui fixe la durée de repos conjointement avec un compteur de trames ayant une cadence plus rapide, le compteur de trames établissant la durée de repos restante à la fin du décompte par le compteur d'état de repos jusqu'à l'activation de l'unité de communication, la valeur de comptage initiale du compteur de trame étant à nouveau réglée et après le réglage du compteur d'état de repos sur une nouvelle de comptage.

6. Procédé selon la revendication 5, dans lequel la nouvelle valeur de comptage initiale est calculée en fonction de la réduction de la durée de l'état de repos.
